(19) **Europäisches Patentamt / European Patent Office / Office européen des brevets**

(11) **EP 2 642 675 B1**

(12) **EUROPEAN PATENT SPECIFICATION**

(45) Date of publication and mention
of the grant of the patent:
**14.03.2018 Bulletin 2018/11**

(51) Int Cl.:
*H04J 11/00* (2006.01)     *H04L 5/00* (2006.01)
*H04L 27/26* (2006.01)     *H04B 7/04* (2017.01)

(21) Application number: **13173249.7**

(22) Date of filing: **20.03.2006**

(54) **Base station, mobile station, and MIMO-OFDM communication method thereof**

Basisstation, Mobilstation, und MIMO-OFDM-Kommunikationsverfahren dafür

Station de base, station mobile, et son procédé de communication MIMO-OFDM

(84) Designated Contracting States:
**DE FR GB IT**

(43) Date of publication of application:
**25.09.2013 Bulletin 2013/39**

(62) Document number(s) of the earlier application(s) in
accordance with Art. 76 EPC:
**06729456.1 / 1 998 484**

(73) Proprietor: **FUJITSU LIMITED**
**Kawasaki-shi,**
**Kanagawa 211-8588 (JP)**

(72) Inventors:
• **Jitsukawa, Daisuke**
**Kanagawa 211-8588 (JP)**

• **Seki, Hiroyuki**
**Kanagawa 211-8588 (JP)**

(74) Representative: **Wilding, Frances Ward et al**
**Haseltine Lake LLP**
**Lincoln House, 5th Floor**
**300 High Holborn**
**London WC1V 7JH (GB)**

(56) References cited:
**EP-A1- 1 178 641        WO-A1-03/041300**
**WO-A1-2005/088866        WO-A2-02/099995**
**US-A1- 2003 128 658**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to a base station and MIMO-OFDM communication method thereof, and more particularly to a base station and MIMO-OFDM communication method thereof that transmits pilot signals together with data to a mobile station using Multiple Input Multiple Output (MIMO) communication from a plurality of antennas using a plurality of OFDM transmitters.

BACKGROUND ART

WO02099995A2 refers to a method and apparatus for negotiating a transmission scenario in a mixed mode spectrum wireless communication system capable of both MISO and SISO traffic. The transmitter determines an antenna diversity configuration for a given communication link and applies a transmission scenario. The base station queries the remote station for antenna diversity status. In response to the antenna diversity status information, the base station determines and applies a transmission scenario. In one example, a base station generates composite MIMO transmissions to multiple SISO mobile stations. EP1178641A1 relates to a cellular communication system for wireless telecommunication on the basis of an OFDM scheme, comprising a plurality of base stations B, whereby at least one base station B is allocated to each cell C of the communication system and whereby information communicated from said base stations comprises data parts and pilot parts. It further relates to a method for operating such a cellular communication system. The frequency reuse factor of the data parts is different from a frequency reuse factor of the pilot parts. US2003128658A1 refers to techniques to schedule terminals for data transmission on the downlink and/or uplink in a MIMO-OFDM system based on the spatial and/or frequency "signatures" of the terminals. A scheduler forms one or more sets of terminals for possible (downlink or uplink) data transmission for each of a number of frequency bands. One or more sub-hypotheses may further be formed for each hypothesis, with each sub-hypothesis corresponding to (1) specific assignments of transmit antennas to the terminal (s) in the hypothesis (for the downlink) or (2) a specific order for processing the uplink data transmissions from the terminal(s) (for the uplink). The performance of each sub-hypothesis is then evaluated (e.g., based on one or more performance metrics). One sub-hypothesis is then selected for each frequency band based on the evaluated performance, and the one or more terminals in each selected sub-hypothesis are then scheduled for data transmission on the corresponding frequency band. WO03041300A1 relates to techniques to adaptively process data prior to transmission, based on channel state information. Various receiver processing techniques are provided to process a data transmission received via multiple antennas at a receiver unit. Adaptive reuse schemes and power back-off are also provided to operate the cells in the system.

In many digital mobile communication systems, in order to compensate for distortion of a data signal in a fading channel, pilot signals are multiplexed and transmitted with a data signal from the transmission side. On the receiving side, the pilot signals that were transmitted from the transmission side are received, and the received pilot signals are compared with a known pilot signal to estimate channel distortion (channel estimation), then channel compensation is performed for the received data signal based on the channel estimation value. There are various methods for multiplexing the data signal and pilot signals, however, the case of using the OFDM (Orthogonal Frequency Division Multiplex) method is explained below.

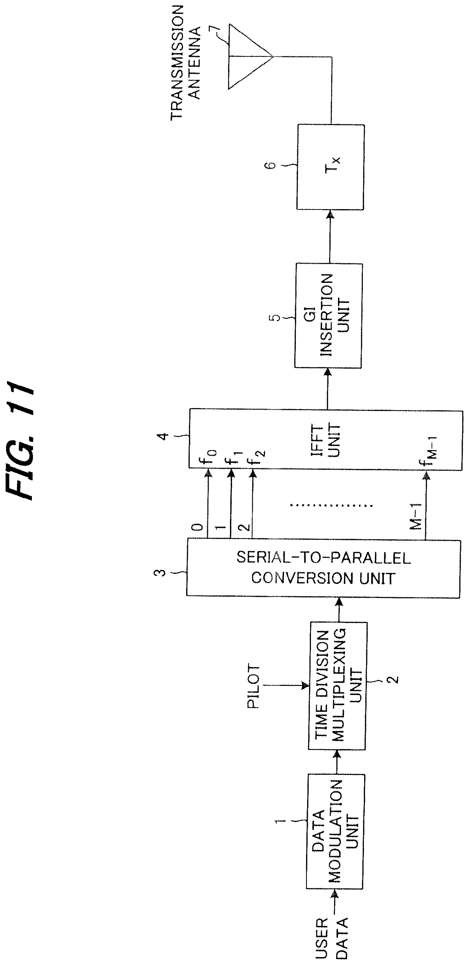

FIG. 11 shows the construction of a transmitter in an OFDM communication system, where a data modulation unit 1 performs QPSK data modulation, for example, on the transmission data (user data and control data), and converts the data to a complex baseband signal (symbol) having a in-phase component and quadrature component. A time-division multiplexing unit 2 inserts pilot symbols into the data symbols by time-division multiplexing. A serial-to-parallel conversion unit 3 converts input data to parallel data of M symbols, and outputs the M symbols as M number of sub-carr ier samples $S_0$ to $S_{M-1}$. An IFFT (Inverse Fast Four ier Transform) unit 4 performs IFFT (inverse Fourier transformation) on the parallel input sub-carrier samples $S_0$ to $S_{M-1}$ and combines them, then outputs the result as a discrete-time signal (OFDM signal). A guard interval insertion unit 5 inserts guard intervals into the OFDM signal having M symbols that is input from the IFFT unit, and a transmission unit (TX) 6 performs DA conversion of the OFDM signal in which guard intervals have been inserted, then converts the frequency of the OFDM signal from a baseband signal to a radio signal, and after performing high-frequency amplification, transmits the signal from an antenna 7.

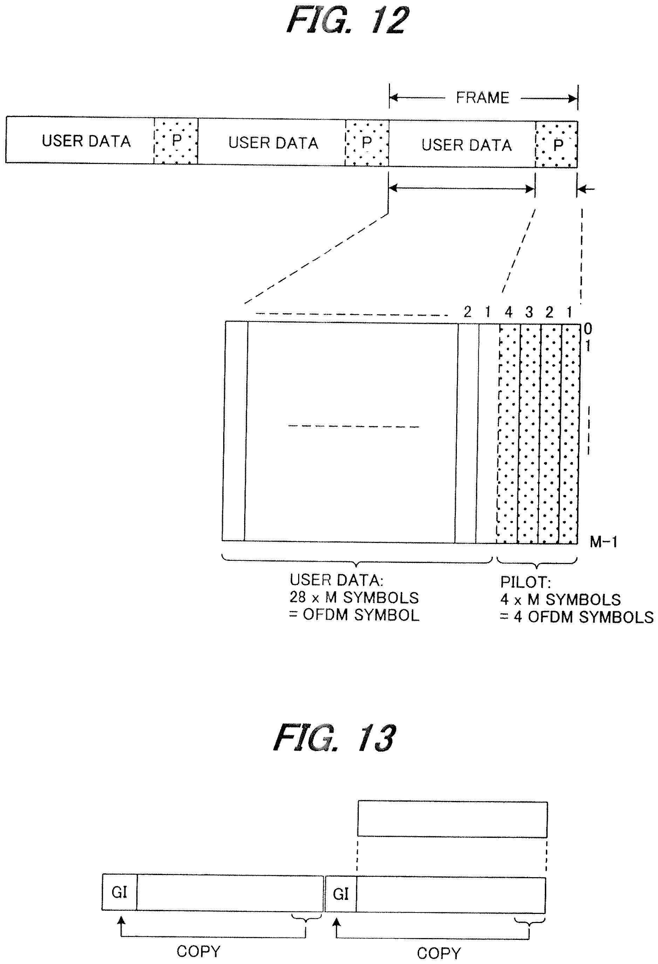

FIG. 12 is a drawing explaining the serial-to-parallel conversion, and shows an example where a common pilot P is time-division multiplexed in front of one frame of transmission data. In a case where the common pilot p is 4 x M symbols (= 4 OFDM symbols) and the transmission user data is 28 x M symbols (= 28 OFDM symbols), the serial-to-parallel conversion unit 3 outputs M symbols of the pilot up to the first 4 times as parallel data, and after that outputs the M symbols of the transmission data 28 times as parallel data. As a result, in one frame period, the pilot can be time-division multiplexed in all subcarriers and transmitted 4 times, and on the receiving side it is possible to use that pilot to estimate the channel for each subcarrier and to perform channel compensation (fading compensation). Here, one OFDM symbol comprises M symbols.

FIG. 13 is a drawing that explains the insertion of guard intervals. When the IFFT output signal that corresponds to M number of subcarrier samples (= 1 ODM symbol) is taken to be one unit, guard interval insertion is the copy i ng of the end section to the front thereof. By inserting guard intervals GI, it becomes possible to eliminate the effect of multipath intersymbol interference.

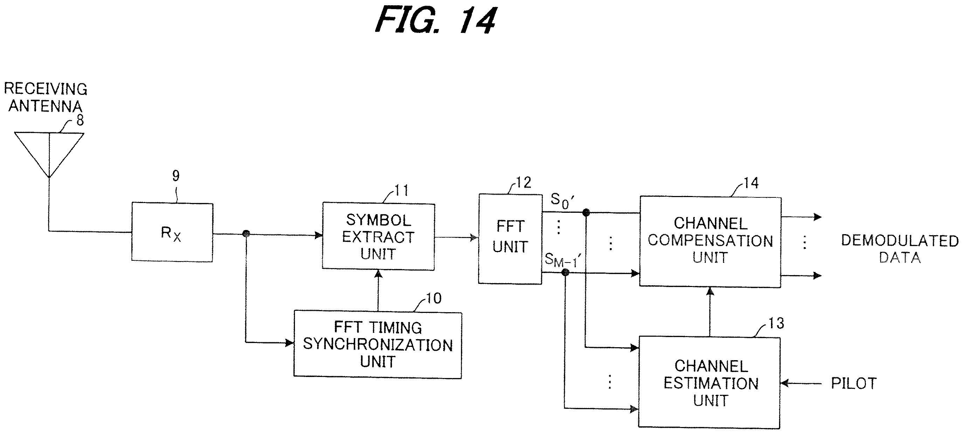

FIG. 14 is a drawing showing the construction of an OFDM receiver. A signal that is output from the transmission antenna 7 passes through a fading channel (propagation path) and received by the receiving antenna 8 of the receiver, after which a receiving circuit (Rx) 9 converts the RF signal received by the antenna to a baseband signal and performs AD conversion to convert that baseband signal to a digital signal and outputs the result. An FFT timing synchronization circuit 10 detects an FFT timing from the time domain signal that is output from the receiving circuit 9, and a symbol extract unit 11 removes the guard intervals GI and extracts the OFDM symbol at the FFT timing and inputs the result to an FFT unit 12. The FFT unit 12 performs FFT processing for each extracted OFDM symbol to convert them to frequency domain subcarrier samples $S_0'$ to $S_{M-1}'$. A channel I estimation circuit 13 performs channel estimation for each subcarrier by calculating the correlation between pilot symbols received at fixed intervals and a known pilot pattern, and a channel compensation circuit 14 uses the channel estimation value to compensate for channel fluctuation of the data symbols. Transmission data that is distributed to each subcarrier is demodulated by the processing described above. After that, the demodulated subcarrier signals are converted to serial data and decoded.

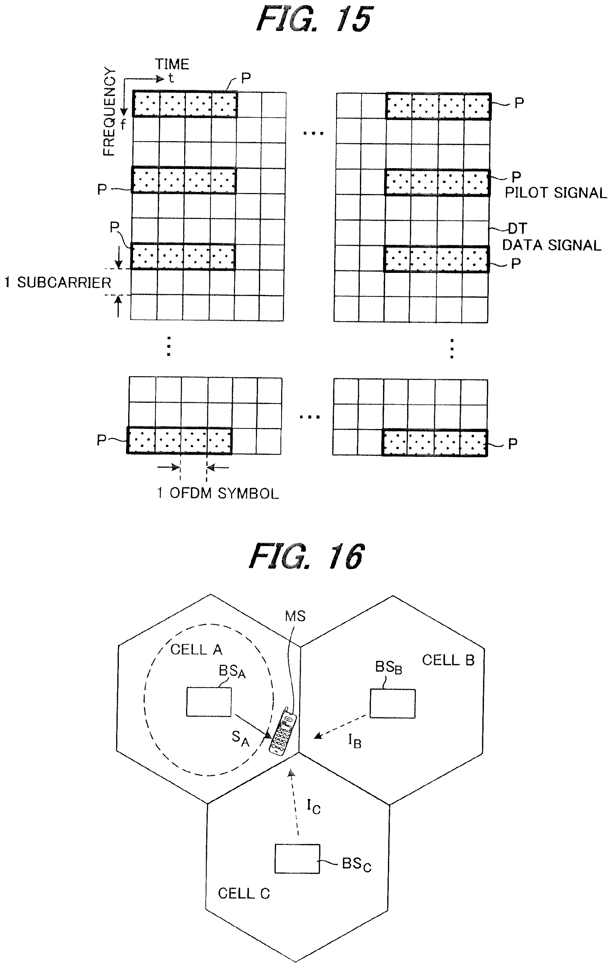

The processing described above is for the case in which the pilot signals are densely arranged in the frequency direction, however, from the aspect of transmission efficiency of the data signal or the capability to follow channel fluctuation, scattered arrangement is known in which pilot signals are sparsely arranged in the time or frequency direction. FIG. 15 shows an example of a scattered arrangement in which for a specified subcarrier, pilot signals P are embedded in a data signal DT across 4 adjacent OFDM symbols. Channel estimation using pilot signals in a scattered arrangement is performed as described below.

The receiver multiplies a received pilot signal after FFT by the complex conjugate of a known pilot signal to calculate the channel estimation value of the subcarrier in which the received pilot signal is embedded. Next, noise and an interference component are somewhat suppressed by averaging this channel estimation value over time among a plurality of adjacent symbols. After that, the channel estimation value of the subcarrier in which that pilot signal is embedded is used to find the channel estimation value of a subcarrier in which the pilot signal is not embedded by performing interpolation or extrapolation in the frequency direction. Similarly, for an OFDM symbol in which a pilot signal is not embedded, the channel estimation value of an OFDM symbol in which a pilot signal is embedded is used to interpolate and find that channel estimation value in the time direction. In the interpolation process mentioned above, linear interpolation is performed between subcarriers or OFDM symbols in which the pilot signal used for interpolation is embedded with the assumption that channel distortion fluctuates linearly. However, to be more precise, actual channel distortion does not fluctuate linearly, but rather has complex fluctuation due to high-speed movement of a mobile station in the time direction or due to delay spread of a multipath channel in the frequency direction, so error occurs in the channel estimation value after interpolation.

Therefore, in the example of scattered arrangement, the transmission efficiency of the data signal improves the wider the insertion interval of the pilot signals is, however, it becomes difficult for channel estimation to follow sudden channel fluctuation that occurs due to high-speed movement of a mobile station, and thus reception characteristics deteriorate. On the other hand, the transmission efficiency of the data signal decreases the narrower the insertion interval of the pilot signals is, and, since it becomes easy for channel estimation to follow sudden channel fluctuation, it becomes difficult for the reception characteristics to deteriorate. Therefore, when designing the arrangement of pilot signals, the geographical environment where the digital mobile communication system will be used, and the estimated speed of movement of the mobile station must be taken into consideration.

Here the case is considered in which in a multi-cell environment as shown in FIG. 16, a mobile station MS that is located near the boundary between cells A, B and C is performing communication with the base station $BS_A$ in cell A. When the mobile station MS receives a downlink signal $S_A$ from the base station $BS_A$ in cell A, it also receives interference signals $I_B$ and $I_C$ from the base stations $BS_B$ and $BS_C$ in the adjacent cells B and C.

In the prior system, these interference signals are suppressed as follows. That is, the transmitter uses a spreading code (channelization code) for spreading transmit data, or uses repetition to copy data for one symbol to a plurality of symbols, after which it multiplies the result by cell unique scramble code and transmits the signal. The receiver multiplies the received signal by the same scramble code that the transmitter used, after which by performing de-spreading using spreading code, or in-phase addition to demodulate the signal, suppresses the interference signals from the adjacent cells to a certain extent.

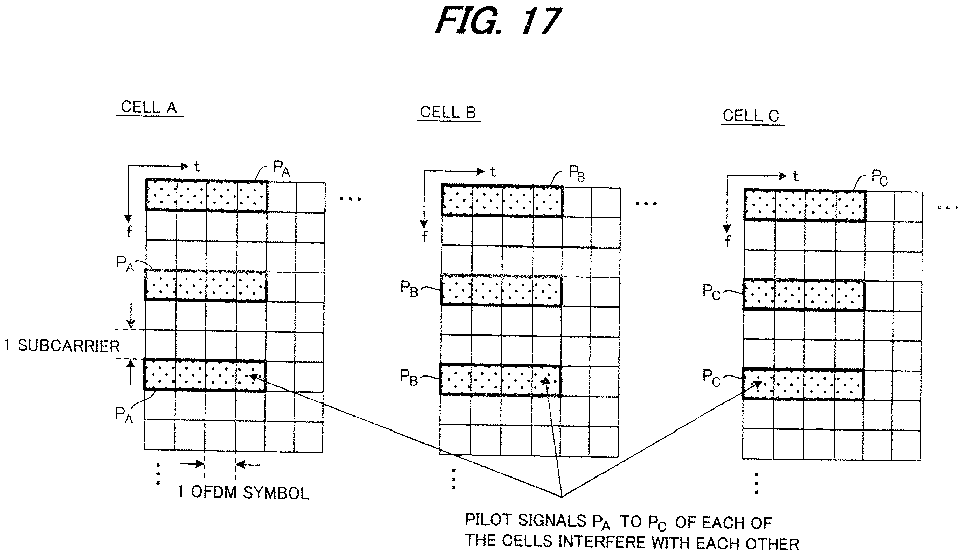

However, pilot signals are transmitted at higher power than data signals, so even though the processing described is performed, the effect from the adjacent cells remains large. Particularly, as shown in FIG. 17, in an inter-base station synchronization system, the arrangement of pilot signals $P_A$, $P_B$ and $P_C$ of the cells A, B and C is identical. Therefore, the pilot signals from each of the cells always interfere with each other, and the channel estimation accuracy deteriorates. In the case of an inter-base station asynchronization system as well, at a certain ratio in time, the pi lot signals of each cell interfere with each other, and channel estimation accuracy deteriorates.

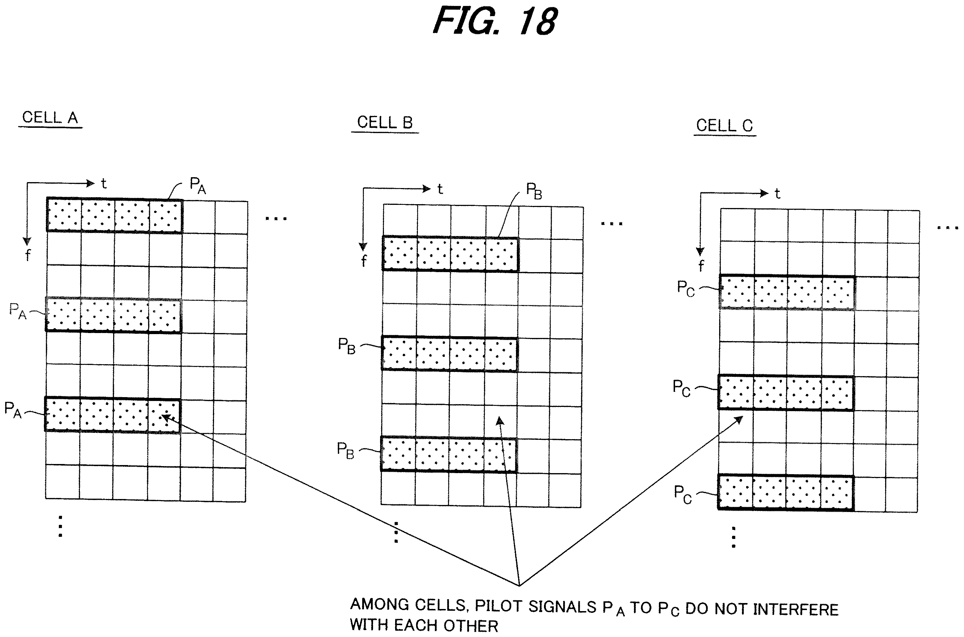

As a countermeasure for avoiding the problem described above, the pilot signals can be ar ranged in each cell so that they do not over lap. In the example shown in FIG. 18, the pi lot signals of three adjacent cells are shifted in the frequency direction and arranged so that they do not overlap. In this case, it is not possible to make the interval in the frequency direction between pilot signals in a specified cell less than n subcarriers (n = number of cells - 1). In the example shown in FIG. 18, n = 2.

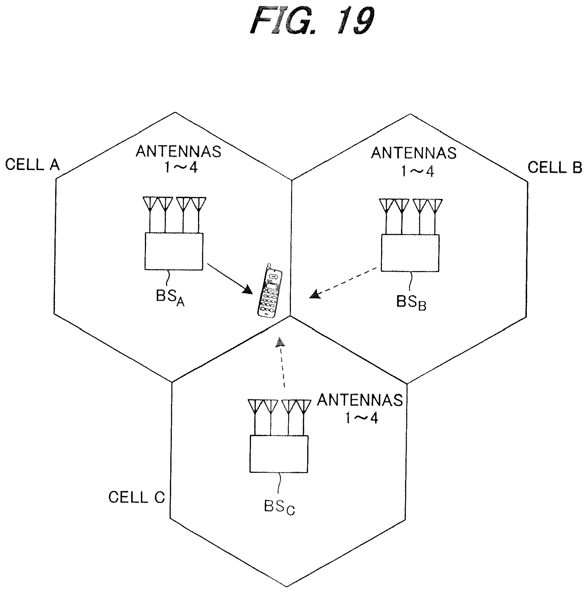

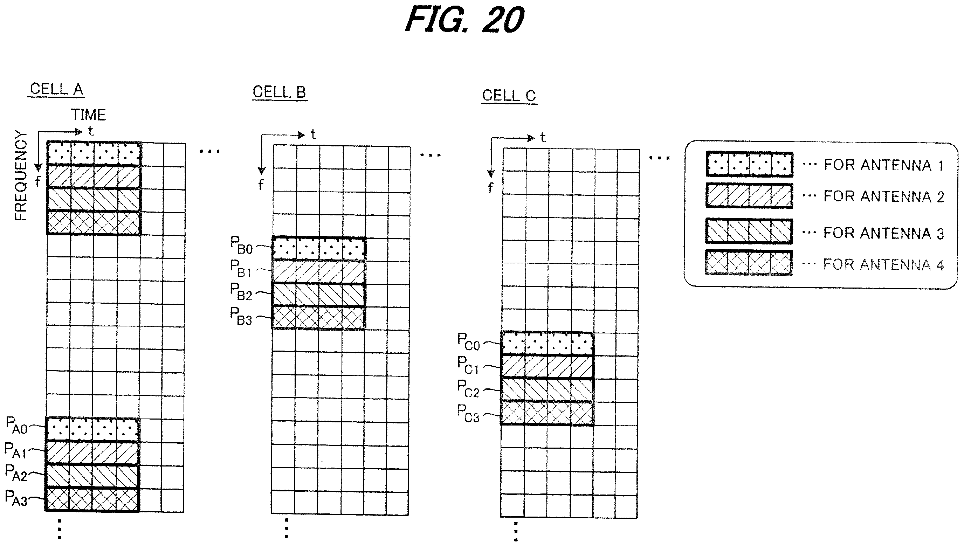

In the case of MIMO (multiple-Input Multiple-Output) multiplex transmission, it is necessary to obtain a channel estimation value for each transmission antenna, so orthogonal pilot signals are transmitted from each transmission antenna. As in the case of single antenna transmission, the arrangement of these pilot signals should be such that they do not overlap in each cell. FIG. 19 is a drawing explaining a multipath environment in which base stations $BS_A$, $BS_B$, and $BS_C$ in cells A, B and C use four antennas 1 to 4 to perform MIMO multiplex transmission, and FIG. 20 shows an example of the pilot signal arrangement of the antennas 1 to 4 of each cell A, B and C. In this example, the pilot signals $PA_0$ to $PA_3$, $PB_0$ to $PB_3$ and $PC_0$ to $PC_3$ for the four transmission antennas of each cell A, B and C are shifted in the frequency direction and arranged so that they do not overlap each other among the three adjacent cells.

However, in the example of pilot arrangement shown in FIG. 20, it is not possible to make the interval in the frequency direction between pilot signals at an arbitrary antenna in an arbitrary cell less than 11 (= 3 cells x 4 antennas - 1) subcarriers. Therefore, when there is large channel fluctuation, the accuracy of channel estimation deteriorates due to interpolation.

When transmitting OFDM signals from a plurality of antennas, there is related art (refer to Japanese patent application 2003-304216) that deters interference in the propagation paths of the pilot signals. In this related art a pilot signal is transmitted from one antenna by a specified subcarrier, and no pilot carriers are output from other antennas, and subcarriers having the same frequency as the pi lot sub carrier of the one antenna is taken to be a null signal. However, this related art is not intended for preventing the interference of pilot signals from other cells or other sectors. Moreover, this related art does not enable channel estimation with high precision while preventing interference of pilot signals from other cells or other sectors.

Taking into consideration the aforementioned problems, the object of the present invention is to enable channel estimation with high precision while preventing interference of pilot signals from other cells or other sectors that are not in communication with the mobile station.

Another object of the present invention is to sufficiently minimize interference between pilot signals and to enable channel estimation that is capable of following sudden channel fluctuation when the mobile station is at a cell boundary or sector boundary.

DISCLOSURE OF THE INVENTION

Aspects of the present invention are defined in the appended independent claims and preferred embodiments are defined in the appended dependent claims.

BRIEF DESCRIPTION OF THE DRAWINGS

FIG. 1 is a drawing giving an overview of the present invention.
FIG. 2 is a table showing the correspondence among the number of receiving antennas, number of data streams and used antennas when controlling the number of multiple data streams according to the communication environment of a mobile station, for example, the SIR.
FIG. 3 is a drawing showing the construction of the MIMO-OFDM communication system of the present invention.
FIG. 4 is a drawing showing in detail the construction of a base station.
FIG. 5 is a drawing showing in detail the construction of a mobile station.
FIG. 6 is an example of pilot signal arrangement in which pilots P1 of each cell do not overlap at the same time in the frequency direction and time direction.
FIG. 7 is a drawing explaining the sector configuration.
FIG. 8 is an example of pilot signal arrangement of a second embodiment of the present invention.
FIG. 9 is a drawing showing the construction of a base station in a second embodiment of the invention.
FIG. 10 is a drawing showing the construction of a mobile station in a second embodiment of the invention.
FIG. 11 is a drawing showing the construction of a transmitter in an OFDM communication system.
FIG. 12 is a drawing explaining serial-to-parallel conversion.
FIG. 13 is a drawing explaining the insertion of guard intervals.
FIG. 14 is a drawing showing the construction of an OFDM receiver.
FIG. 15 is an example of scattered arrangement in a specified subcarrier in which pilot signals P are embedded in data DT across four adjacent OFDM symbols.
FIG. 16 is a drawing explaining a multi-cell environment.
FIG. 17 is a first example of conventional pi lot signal arrangement.
FIG. 18 is a second example of convention pilot signal arrangement.
FIG. 19 is a drawing explaining a multi-cell environment in MIMO-OFDM communication.
FIG. 20 is an example of conventional pilot signal arrangement in MIMO-OFDM communication.

DESCRIPTION OF THE PREFERRED EMBODIMENTS

(A) Overview of the Present Invention

■ Cell Configuration and Pilot Arrangement

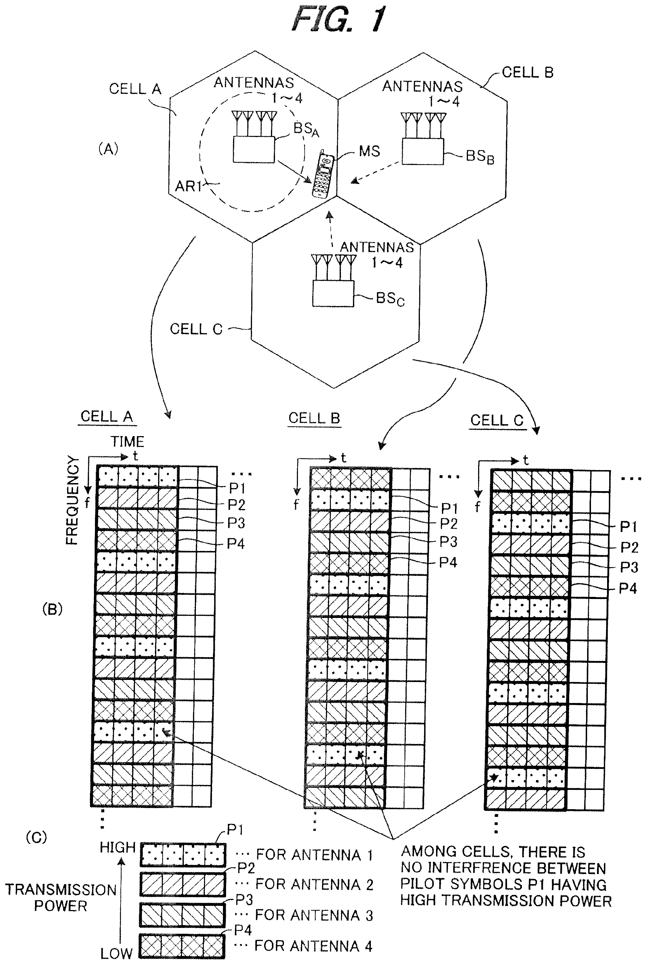

FIG. 1 is a drawing giving an overview of the present invention, where as shown in (A) of FIG. 1, base stations $BS_A$, $BS_B$ and $BS_C$ in cells A, B and C use four antennas 1 to 4 respectively to perform MIMO-OFDM communication with a mobile station. As shown in (B) of FIG. 1, the pilot signal arrangement of the four antennas 1 to 4 of each of the base stations $BS_A$, $BS_B$ and $BS_C$ is such that the pilot signals are densely arranged in the frequency direction, and the pilot signals are ar ranged so that they overlap in the time direction (in the first four OFDM symbols of a frame). The pilot signals of the antennas 1 to 4 of each of the base stations can be distinguished according to pattern, and as shown in (C) of FIG. 1, P1 is the pilot signal for antenna 1, P2 is the pilot signal for antenna 2, P3 is the pilot signal for antenna 3 and P4 is the pilot signal for antenna 4, with the power of the pilot signals being set so that P1>P2>P3>P4. It should be noticed that the pilots P1 that are transmitted from the first antennas 1 of the base stations $BS_A$, $BS_B$ and $BS_C$ of each of the cells A, B and C do not overlap in the frequency direction.

■ Switching Control Between Multiple Data Stream Transmission and Single Data Stream Transmission

In the present invention, in the event that the communication environment with the mobile station becomes poor, the base station switches from MIMO communication, which is multiple data stream transmission, to single input multiple output (SIMO) communication, which is single data stream transmission. For example, when the mobile station MS moves while communicating with the base station $BS_A$, the base station $BS_A$ transmits data and pilot signals to the mobile station MS from the four antennas 1 to 4 using MIMO-OFDM communication (multiple stream data transmission) as long as that mobile station MS is in an area AR1 that is near the base station $BS_A$ and the communication environment is such that the SIR (signal to interference ratio) is large.
When the mobile station MS moves to a cell boundary area and i t rece i ves interference from an adjacent cell and the SIR is small, the BER (bit error rate) increases even though MIMO-OFDM communication is performed. Therefore, in that case, the base station $BS_A$ switches to single input multiple output (SIMO) communication (single data stream transmission) and transmits data and pilot signals from only one antenna.
When performing single data stream transmission, the base stations $BS_A$, $BS_B$ and $BS_C$ of each of the cells transmit data and pilot signals to the mobile station from the first antenna 1, however, as can be clearly seen from (B) of FIG. 1, in each of the cells A, B and C, the pilots P1 that are transmitted from antenna 1 during single data stream transmission are arranged so that they do not overlap. That is, the pilot signals are arranged so that the pilot signals P1 of a cell that are used for channel estimation during single data stream transmission and pi lot signals P1 of an adjacent cell that are used for channel estimation during single data stream transmission do not overlap each other in the frequency direction.
As a result, during single data stream transmission there is no interference between the pilot signals P1 for channel estimation of one cell and the pilot signals P1 of an adjacent cell, so even at the cell boundary, the SIR of the pilot signals is improved, and accurate channel estimation is possible. Moreover, in the example shown in (B) of FIG. 1, the pilot signals Pi (i = 1 to 4) that are transmitted from a specified antenna can be arranged at 3-subcarrier intervals, so error in channel estimation that occurs during MIMO-OFDM communication due to interpolation is reduced, and accurate channel estimation becomes possible.
During single data stream transmission, the pilot signals P1 for channel estimation of a cell overlaps the pilots P2 to P4 of adjacent cells in the frequency direction, however there is little effect due to interference. Particularly, in the example of arrangement shown in (B) of FIG. 1, during single data stream transmission, the power of the pi lots P1 transmitted from antenna 1 is greater than the power of the pi lot signals P2 to P4 that are transmitted from the other antennas 2 to 4, so at the cell boundary pilot signals P2 to P4 other than the pilot P1 arrive sufficiently damped, thus the interference from pilots P2 to P4 from adjacent cells can be considered to be minor.

■ Controlling the Number of Multiple Data Streams

Above, switching control was performed to switch transmission between multiple data stream transmission and single data stream transmission based on the communication environment of the mobile station, for example the SIR value. In the case of this switching control, only the power of the pilot signals P1 need be made greater than the power of the other pilot signals P2, P3, P4, and there is no need to make the power between the other pilot signals different. However, in the case of controlling the number of multiple data streams according to the communication environment, for example the SIR value, the power of each of the pilot signals should be set differently such as P1>P2>P3>P4.

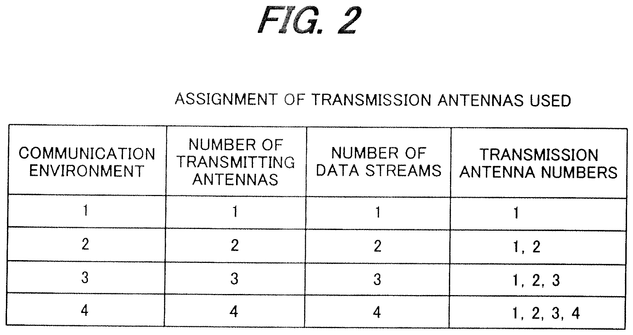

In MIMO multiplex transmission, the signals from each transmission antenna arrive at the receiver while overlapping in the radio channel, so the distance between signal constellation points in the received signal becomes shorter the larger the number of data streams is, and the required reception SIR for achieving a fixed bit error rate BER increases. In other words, the smaller the number of data streams is, it is possible to achieve a fixed bit error rate even when the reception SIR is small. Therefore, in the present invention, the number of multiples data streams is controlled according to the communication environment, for example the SIR value. For example, as shown in FIG. 2, the communication environment is divided into four levels, where in the worst environment (communication environment 1), the number of data streams is 1, and the number of the antenna to be used is taken to be 1. In communication environment 2, the number of data streams is 2, and the numbers of the antennas used are 1 and 2, in communication environment 3, the number of data streams is 3, and the numbers of the antennas used are 1, 2 and 3, and in the best communication environment 4, the number of data streams is 4, and the numbers of the antennas used are 1, 2, 3 and 4.

By controlling the number of multiple data streams according to the communication environment as described above, it is possible to take advantage of the merits of MIMO-OFDM communication as much as possible.

■ Example of Another Pilot Arrangement

In the example of the pilot arrangement shown in (B) of FIG. 1, the pilots P1 that are transmitted by antenna 1 of each of the cells during single data stream transmission are arranged so that they do not overlap in the frequency direction, however, at the same time it is possible to arrange the pilots so that they do not overlap in the time direction or so that there is no overlapping in just the time direction.

As described above, with the present invention, pilot signals that are used for channel estimation by a mobile station that performs single data stream transmission can be arranged so that they do not overlap each other in adjacent cells in the time and/or frequency direction, and the mobile station that performs single data stream transmission, can receive a desired signal without receiving the effects of interfering signals from adjacent cells even at the cell boundaries.

(B) First Embodiment

(a) Construction of a MIMO-OFDM Communication System

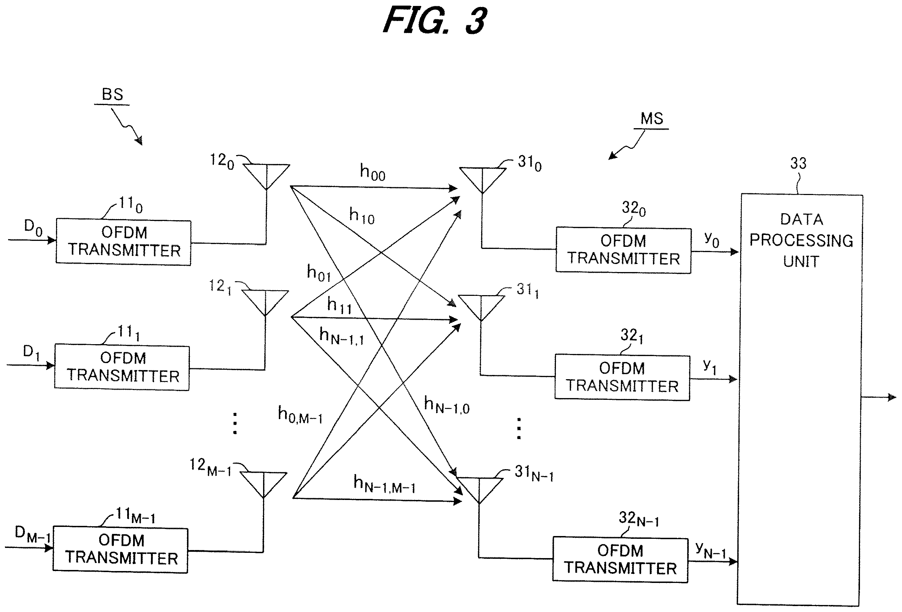

FIG. 3 is a drawing showing the construction of a MIMO-OFDM communication system of the present invention, where BS indicates a base station, and MS indicates a mobile station. The base station BS is a base station of one of the cells A to C shown in (A) of FIG. 1, for example, cell A. All of the base stations of the cells A to C have the same construction.

In the base station BS, the same number of data streams $D_0$ to $D_{M-1}$ as the number of transmission antennas M pass through specified processing by respective OFDM transmitters $11_0$ to $11_{M-1}$, and are transmitted from transmission antennas $12_0$ to $12_{M-1}$. The processing performed by the OFDM transmitters $11_0$ to $11_{M-1}$ include error correction encoding, data modulation, data/control signal/pi lot multiplexing, scrambling, IFFT transformation, and GI insertion.

Signals, which are transmitted from the antennas $12_0$ to $12_{M-1}$ and are arranged so that they are not correlated with each other, pass through independent fading channels $h_{nm}$ (m = 0 to M-1, n = 0 to N-1), and after being multiplexed in space, are received by N number of receiving antennas $31_0$ to $31_{N-1}$. The signals that are received by the receiving antennas pass through processing by OFDM receivers $32_0$ to $32_{N-1}$ such as frequency down conversion, AD conversion, FFT timing detection, GI removal, FFT transformation, descrambling, and data/control signal/pilot separation, to generate $y_0$ to $y_{N-1}$ reception data streams. Each of the reception data streams, are formed by M number of multiplexed transmission data streams, so a data processing unit 33 performs signal processing of all of the reception data streams to separate out and reproduce the transmission data streams $D_0$ to $D_{M-1}$.

Various methods are proposed for the algorithm for signal processing of separating out the transmission data streams $D_0$ to $D_{M-1}$ from the reception signals, however, here the MLD (Maximum Likelihood Decoding) algorithm will be explained. When the transmission data streams are expressed by a M-dimensional complex matrix, and the reception data streams are expressed by a N-dimensional complex matrix, they are related by the following equations.

$$Y = H \cdot D$$

$$H = \begin{bmatrix} h_{00} \cdot h_{01} \cdots \cdots h_{0M-1} \\ h_{10} \cdots \cdots \cdots \cdots h_{1M-1} \\ \cdots \cdots \cdots \cdots \cdots \cdots \\ h_{N-10} \cdots \cdots \cdots h_{N-1M-1} \end{bmatrix}$$

$$D = \begin{bmatrix} D_0 \cdot D_1 \cdots \cdots D_{M-1} \end{bmatrix}^T$$

$$Y = \begin{bmatrix} y_0 \cdot y_1 \cdots \cdots y_{N-1} \end{bmatrix}^T$$

The MLD algorithm estimates the transmission data stream (transmission vector) D by the following equation.

$$\hat{D} = \arg\min \lVert Y - H \cdot D \rVert^2$$

Here, by taking the number of arranged signal constellation points of modulated data that is input to the M number of antennas to be Q, then $Q^M$ number of transmission vector combinations exist. In QPSK modulation, Q = 4. In the MLD algorithm, $Q^M$ number of transmission vector candidates (replicas) are generated, and calculation is performed according to the equations above, and the replica with the smallest result is estimated to be the input data.

(b) Construction of a Base Station BS

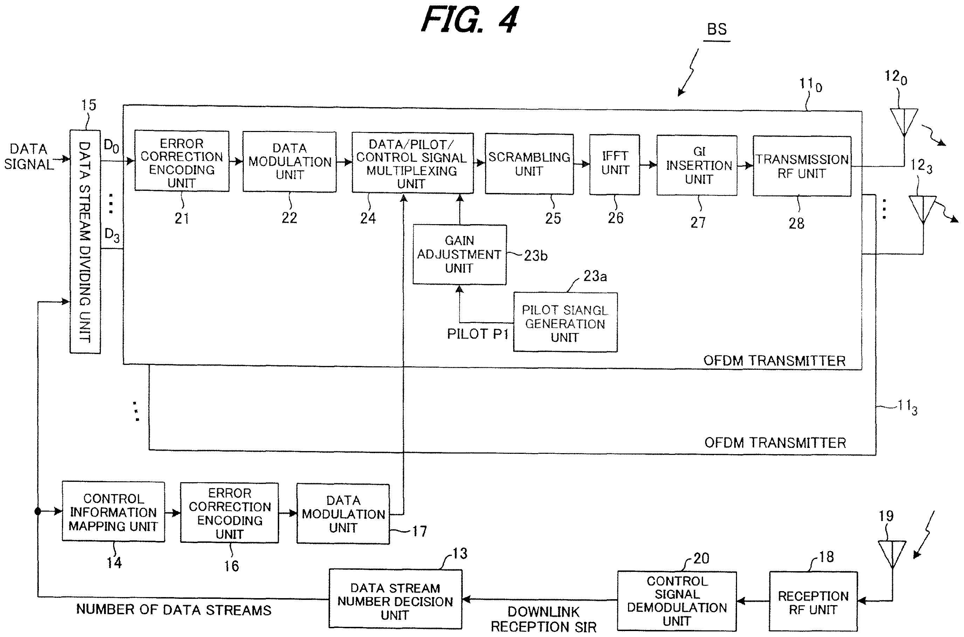

FIG. 4 shows the detailed construction of a base station BS for the case in which M = 4, and is an example of controlling the number of multiple data streams according to the communication environment. The same reference numbers are used for parts that are the same as those shown in FIG. 3.

A data stream number decision unit 13 decides the number of data streams based on the communication environment with the mobile station MS as will be described later, and inputs the result to a control information mapping unit 14 and data stream dividing unit 15. The control information mapping unit 14 maps the number of input data streams at a specified location as control information, an error correction encoding unit 16 performs error correction encoding processing the control information, and a data modulation unit 17 performs data modulation of the control data.

The data stream dividing unit 15 performs serial-to-parallel conversion of the data signal according to the number of data streams, and inputs the result to OFDM transmitters $11_0$ to $11_3$. The OFDM transmitters $11_0$ to $11_3$ generate transmission signals for each of the transmission antennas $12_0$ to $12_3$ from the respective data streams $D_0$ to $D_3$, and transmits those signals from the transmission antennas $12_0$ to $12_3$. By taking the antenna numbers of the transmission antennas $12_0$ to $12_3$ to be 1 to 4, the number of data streams and the transmission antenna numbers used are as shown in FIG. 2. The OFDM transmitters $11_0$ to $11_3$ have nearly the same construction, where the only difference is that OFDM transmitter $11_0$ transmits control signals, and the other OFDM transmitters $11_1$ to $11_3$ do not transmit control signals.

In the OFDM transmitter $11_0$, the error correction encoding unit 21 performs error correction encoding processing of the data of the first data stream $D_0$ that is input, and the data modulation unit 22 performs data modulation of the input data. A pilot signal generation unit 23a generates pilot signals P1, and a gain adjustment unit 23b adjusts the amplitude of the pilot signals P1. The method for adjusting the amplitude of the pilot signals will be described later.

Next, a data/pilot/control signal multiplexing unit 24 multiplexes the data signal, control signal and pilot signal and performs parallel output of subcarrier components of N samples. As shown in (B) of FIG. 1, the data/pilot/control signal multiplexing unit 24 maps the pilot signals P1 on a specified subcarrier of a specified OFDM symbols. A scrambling unit 25 multiplies the subcarrier components of N samples by a cell unique scramble code, and an IFFT unit 26 performs IFFT transformation of the subcarrier components of the N samples to convert the frequency domain signal to a time domain signal. A GI insertion unit 27 inserts guard intervals (GI), and a transmission RF unit 28 performs D/A conversion, after which it performs frequency conversion to convert the signal from a baseband signal to a radio frequency signal, then amplifies the signal and transmits it from the transmission antenna $12_0$.

At the same time as the above, a reception RF unit 18 receives a signal from the reception antenna 19 that is transmitted from the mobile station MS, after which it performs frequency conversion to convert the frequency from a radio frequency to a baseband frequency, then performs AD conversion and inputs the signal to a control signal demodulation unit 20. The control signal demodulation unit 20 performs demodulation to demodulate the control signal that was fed back from the mobile station, then extracts the down link reception SIR information that is contained in that control signal. The downlink reception SIR indicates the communication environment of the mobile station MS, and is a reception SIR that is measured using the transmitted pilot signals that the mobile station MS receives from the base station BS. The data stream number decision unit 13 decides the number of data streams to transmit according to the table shown in FIG. 2 based on the downlink reception SIR information, and inputs that number to the control information mapping unit 14 and data stream dividing unit 15.

(c) Method of Deciding the Number of Data Streams

The fundamental characteristic of MIMO multiplex transmission is considered. In MIMO multiplex transmission, signals that are transmitted from each transmission antenna arrive at the mobile station while overlapping in a radio channel. Therefore, the larger the number of data streams is, the shorter the distance between signal constellation points of the received signals becomes, and the required reception SIR for achieving a constant bit error rate BER increases. In other words, the smaller the number of data streams is, the more possible it is to achieve a constant bit error rate BER even when the reception SIR is small.

Moreover, the reception SIR generally decreases as the distance between the base station and mobile station increases. Therefore, in order to maximize the throughput of data signals, by measuring the reception

SIR and comparing that reception SIR with a specified threshold value, control can be performed so that when the reception SIR is high (when the mobile station is near the base station) the number of data streams is increased, and when the reception SIR is low (when the mobile station is near the cell boundary) the number of data streams is decreased.

In order to do this, the data stream number decision unit 13 decides the number of data streams according to the value of the reception SIR. For example, the reception SIR (communication environment) is divided into four levels as shown in FIG. 2, where in the worst environment (communication environment 1), the number of data streams is 1, and the number of the antenna to be used is taken to be 1. In communication environment 2, the number of data streams is 2, and the numbers of the antennas used are 1 and 2, in communication environment 3, the number of data streams is 3, and the numbers of the antennas used are 1, 2 and 3, and in the best communication environment 4, the number of data streams is 4, and the numbers of the antennas used are 1, 2, 3 and 4.

(d) Pilot Signal Amplitude

Next, the mapping position of the pilot signals by the data/pilot/control signal multiplexing unit 24, and amplitude adjustment of the pilot signals will be explained.

When the mobile station is near a cell boundary, the reception SIR of the data signal is relatively low, so the data stream number decision unit 13 decides the number of data streams so that single data stream transmission is performed. Accordingly, from the standpoint of the mobile station that is at the cell boundary, it is sufficient that only the channel estimation value for single data stream transmission have a certain level of quality. Therefore, the power of the pilot signals P1 that are transmitted from the transmission antenna $12_0$ that are used for single data stream transmission is set sufficiently high. That is, the gain adjustment unit 23b of the OFDM transmitter $11_0$ makes the amplitude of the pilot signals P1 large before the signals are transmitted from the transmission antenna $12_0$, and the power of the pilot signals P2, P3, P4 that are transmitted from the other transmission antennas $12_1$, $12_2$, $12_3$ is lower than the power of the pilot signals P1. As shown in FIG. 2, when the number of data streams is control based on the communication environment, the pilot signal power is set as P1 >P2>P3>P4.

Even though a difference in power is set in this way, from the standpoint of the mobile station that is near the base station, the amount of damping of the pilot signal in the radio channel is relatively small, so there is little effect on the accuracy of channel estimation.

(e) Pilot Arrangement Method

(B) of FIG. 1 is an example of the pilot signal arrangement in three cells A, B and C, where pilot signals are arranged in the portion of the first four OFDM symbols of a frame, and they are densely arranged in the frequency direction.

During single data stream transmission, the base stations $BS_A$, $BS_B$, $BS_C$ of each of the cells transmit data and pilot signals P1 to the mobile station from the first antenna $12_0$, however, in this example of pilot arrangement, the pilots P1 from each cell A, B, C do not overlap in the frequency direction. That is, pilot signals P1 in a cell that is used for channel estimation during single data stream transmission, and the pilot signals P1 of adjacent cells that are used for channel estimation during single data stream transmission are arranged so that they do not overlap each other in the frequency direction.

For a mobile station MS at the cell boundary, only the power of pilot signals P1 from other cells is large and dominant as interference. Therefore, it is necessary that there be no interference from other cells due to the pilot signals P1. Since transmission to the mobile station MS at the cell boundary is single data stream transmission, the pilot signals P1 that are transmitted by single data stream transmission should not receive interference from pilot signals P1 from other cells. In order to accomplish this, the positions of the pilot signals P1 of each of the cells A, B, C are such that they are different from each other, and even though the pilot signals P1 are arranged in the same positions as any of the pilot signals P2 to P4 from the transmission antennas $12_1$ to $12_3$ of other cells, there is no interference.

With the pilot arrangement shown in (B) of FIG. 1, the pilot signals P1 for channel estimation of the cells A, B, C during single data stream transmission do not interfere with the pilot signals P1 of adjacent cells, so the SIR of the pilot signals improves even at the cell boundary, and thus good channel estimation becomes possible. In addition, in the example shown in (B) of FIG. 1, pilot signals Pi (i = 1 to 4) that are transmitted from a specified antenna are arranged at three-subcarrier intervals, so during MIMO-OFDM communication, the error in channel estimation that occurs due to the interpolation process becomes small, and good channel estimation becomes possible. In other words, since it is possible to keep the subcarrier interval between pilot signals from an arbitrary antenna of an arbitrary cell small, it is possible to improve the accuracy of the interpolation process, and thus channel estimation that is capable of following sudden channel fluctuation is possible.

(f) Construction of a Mobile Station

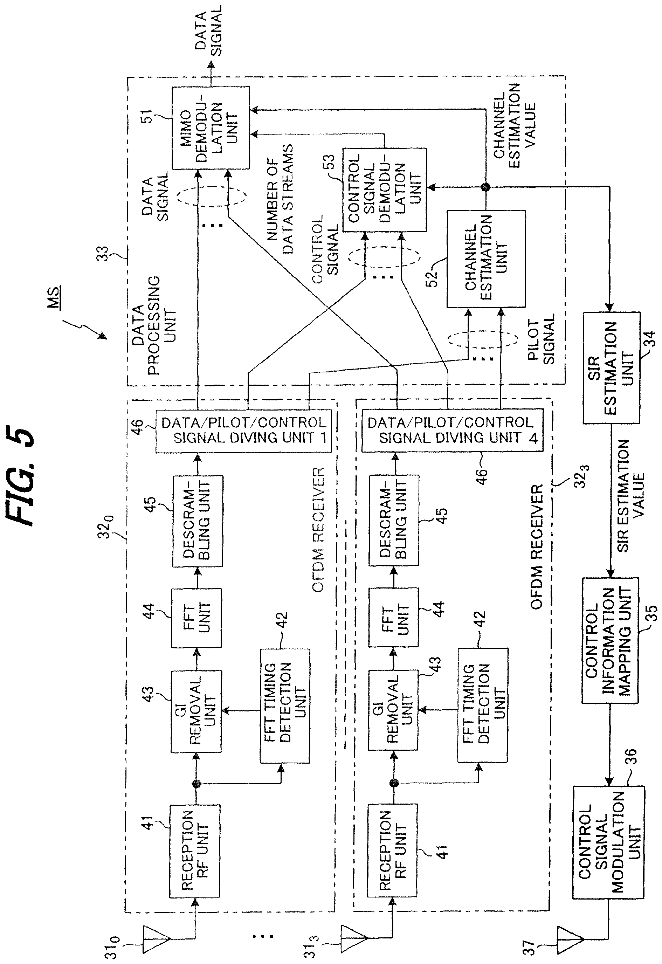

FIG. 5 is a drawing showing the detailed construction of a mobile station MS in the case where N = 4, with the same reference numbers being used for parts that are the same as those shown in FIG. 3.

The signals received by each of the receiving antennas $31_0$ to $31_3$ are input to OFDM receivers $32_0$ to $32_3$. All of the OFDM receivers $32_0$ to $32_3$ have the same construction, and a reception RF unit converts the frequency of the received signals from a radio frequency to a baseband frequency, then performs A/D conversion and inputs the result to a FFT timing detection unit 42 and GI removal unit 43. The FFT timing detection unit 42 detects the FFT timing, and the GI removal unit 43 removes the GI according to the FFT timing, and after making the data N sampling parallel data, inputs the data to a FFT unit 44. The FFT unit 44 converts the N sample signals in the time domain to N number of subcarrier signal components in the frequency domain, and a descrambling unit 45 multiplies the N number of subcarrier signal components by the same code as descramble code used by the base station, and extracts the signal received from the base station. A data/pilot/control signal separation unit 46 separates the data signal, pilot signal and control signal that are mapped at specified locations, and inputs the data signal to a MIMO demodulation unit 51 of a data processing unit 33, inputs the pilot signal to a channel estimation unit 52, and inputs the control signal to a control signal demodulation unit 53.

The channel estimation unit 52 first obtains a channel estimation value for the subcarrier of the OFDM symbol in which the pi lot signals are embedded. In other words, the channel estimation unit 52 performs a correlation operation to correlate the pilot signals received from the receiving antennas $31_0$ to $31_3$ with a known transmission pilot signal, and performs in-phase addition of the obtained correlation value among 4 symbols, to obtain a channel estimation value for which interference signals from adjacent cells have been somewhat suppressed. Next, by performing interpolation or extrapolation of the channel estimation values for each of the antennas in the time or frequency direction, the channel estimation unit 52 obtains channel estimation values for subcarriers of OFDM symbols in which pi lot signals are not embedded. After that, for each antenna, the channel estimation unit 52 inputs the channel estimation values for each of the subcarriers of each of the OFDM symbols to the MIMO demodulation unit 51 and control signal demodulation unit 53.

The control signal demodulation unit 53 uses the channel estimation values to perform channel compensation of the control signals that were transmitted from the one transmission antenna $12_0$ and received by the four receiving antennas $31_0$ to $31_3$, then by performing diversity combining among the receiving antennas, demodulates the control information, extracts out the information about the number of data streams that were mapped at specified locations in the control signal, and inputs the result to the MIMO demodulation unit 51.

The MIMO demodulation unit 51 uses the data signals received from each of the receiving antennas and the channel estimation values to perform a well-known MIMO channel separation process based on the number of data streams, and by performing P/S conversion of each of the data streams obtained from that MIMO channel separation operation and outputting the result, restores the data signal.

Moreover, a SIR estimation unit 34 uses the channel estimation values that are estimated by the channel estimation unit 52 to estimate the reception SIR. More specifically, the desired signal power S is regarded as the sum of the squares of both the real portion and imaginary portion of the channel estimation value (complex value) between a specified transmission antenna and receiving antenna, the interference signal power I is regarded as the variance of a plurality of symbols, and the estimated value of the reception SIR is computed by the ratio of S and I. A control information mapping unit 35 maps the SIR estimation value at a specified location as control information, and a control signal modulation unit 36 generates a control signal by performing a process such as error correction encoding and data modulation, then multiplexes the control signal, user data and pilot signals and transmits that multiplexed signal to the base station BS from a transmission antenna 37.

(g) Another Example of Pilot Arrangement

The pilot signal arrangement shown in (B) of FIG. 1 is an example in which the pilots P1 of each of the cells do not overlap in the frequency direction, however, it is also possible for the pilots P1 of each of the cells to not overlap at the same time in both the frequency direction and time direction.

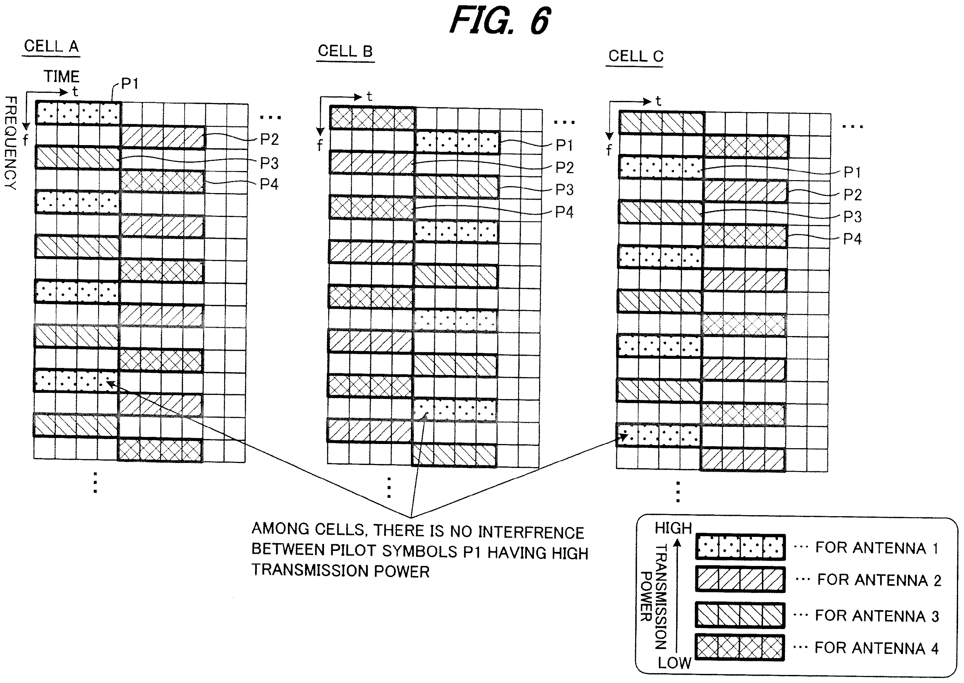

FIG. 6 shows an example of pilot signal arrangement in which pilots P1 of each cell do not overlap at the same time in both the frequency direction and time direction. According to this example of pilot signal arrangement, pilot signals are located every other sub carrier in the frequency direction in both the first four OFDM symbols and the next four OFDM symbols, and the subcarriers where the pilot signals are located are different between the first four OFDM symbols and the next four OFDM symbols. In addition, it is arranged that the pilot signals P1 of the cells A, B, C do not overlap in the frequency direction each other, and the pilot signals P1 of cell B and the pilot signals P1 of cells A and C do not overlap in the time direction.

In the case of an inter-base station synchronization system, it is also possible to employ pilot signal arrangement in which the pilots P1 of each cell do not overlap only in the time direction.

(h) Variation

In the first embodiment of the present invention, the number of data streams was controlled from 1 to 4 based on the communication environment (reception SIR) of the mobile station, however, configuration is also possible in which data and pilot signals are transmitted by switching between either MIMO communication, which is multiple data stream transmission, or single input multiple output (SIMO) communication, which is single data stream transmission, based on the communication environment (reception SIR) of the mobile station.

(C) Second Embodiment

In the first embodiment, a method for reducing the effect of interference signals received by a mobile station at a cell boundary from adjacent cells was explained. Using a similar method, it is also possible to reduce the effect of interference signals received by a mobile station at a sector boundary from adjacent sectors in the case where a cell comprises a plurality of sectors.

(a) Sector Configuration and Pilot Signal Arrangement

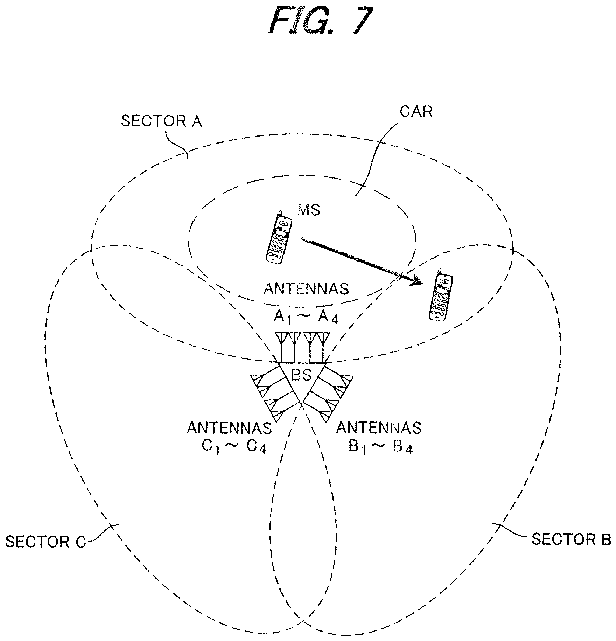

FIG. 7 shows the presumed sector configuration. A cell is divided into three sub-areas, each having a center angle of 120°, such that sectors A, B and C are formed by antennas $A_1$ to $A_4$, $B_1$ to $B_4$ and $C_1$ to $C_4$ having directionality such that they cover the respective sub-areas. In the case where the mobile station MS is in a area CAR near the center of sector A, signals are received from the base station BS only from sector antennas $A_1$ to $A_4$, however when the mobile station MS moves near the boundary between sectors A and B, the mobile station MS receives signals from sector antennas $B_1$ to $B_4$ as interference signals.

Normally, these interference signals are suppressed as described below. That is, at the base station BS, after spreading using spreading code or copying the information of one symbol to a plurality of symbols by repetition, the resulting signal is multiplied by a sector-unique scramble code and transmitted. At the mobile station MS, the signal is multiplied by the same scramble code as used by the base station BS, and then de-spreading using the spreading code, or in-phase addition is performed, thereby the interference signals from the adjacent sectors are suppressed somewhat. However, in regards to the plot signals, the plot signals are transmitted at relatively high power, so even though the processing described above is performed, they continue to interfere with adjacent sectors, and have a large effect on the adjacent sectors. Particularly, when the arrangement of pi lot signals of each sector is common, the pi lot signals of each sector interfere with each other, and the accuracy of channel estimation deteriorates.

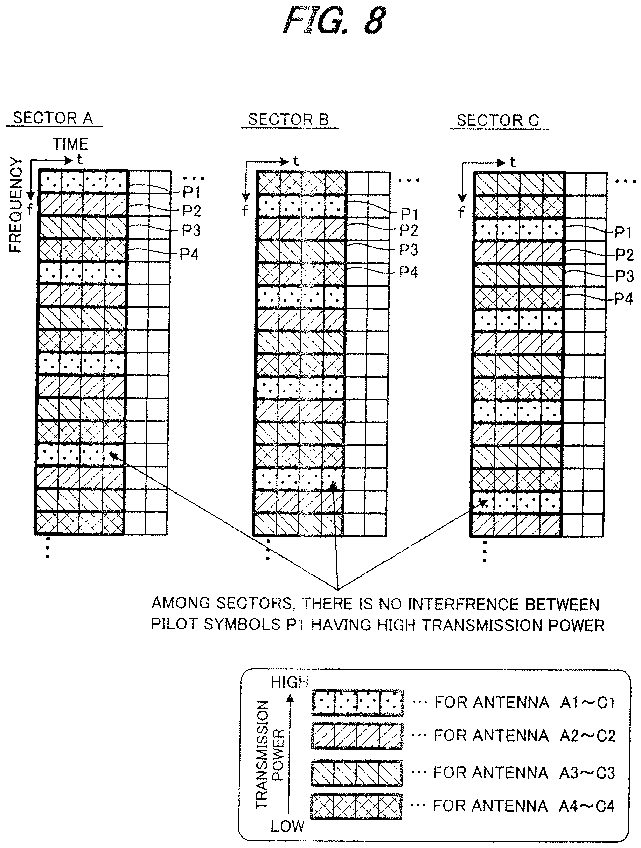

In a second embodiment of the invention, as in the first embodiment, the pilot signals P1 from the transmission antennas $A_1$, $B_1$ and $C_1$ that are used in single stream transmission are transmitted at a sufficiently high power, and the pi lot signals P2, P3, P4 from the transmission antennas $A_2$ to $A_4$, $B_2$ to $B_4$ and $C_2$ to $C_4$ are transmitted at a lower power than the pilot signals from the transmission antennas $A_1$, $B_1$ and $C_1$. In other words, the transmission power of the pilot signals P1, P2, P3 and P4 is set so that P1>P2>P3>P4. Moreover, as shown in FIG. 8, the arrangement of the pi lot signals is such that, as in the first embodiment, the positions of the pilot signals P1 from the transmission antennas $A_1$, $B_1$ and $C_1$ of the sectors A, B and C are different from each other in the frequency direction.

By doing this, as long as a mobile station at a sector boundary performs single stream transmission, the effect on channel estimation of pilot signals from other sectors becomes minor, so stable reception can be performed. Therefore, by switching the number of data streams transmitted when a mobile station is at a sector boundary to a single data stream, stable reception can always be performed regardless of the position of the mobile station within a sector.

(b) Base Station Construction

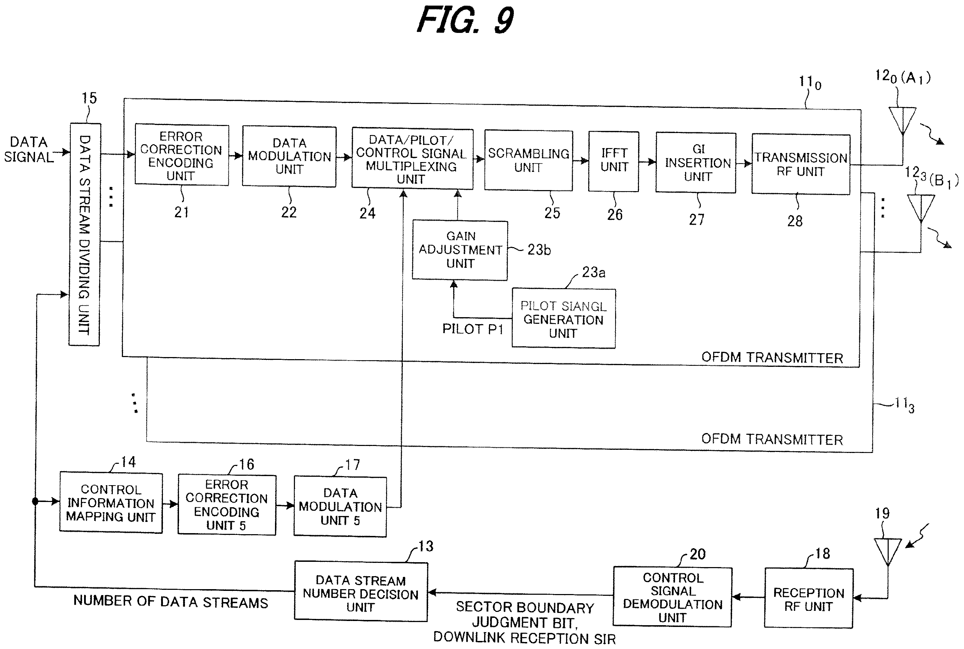

FIG. 9 is a drawing showing the construction of a base station of this second embodiment of the invention, and it differs from the construction of the first embodiment shown in FIG. 4 in that downlink reception SIR information and a sector boundary judgment bit are mapped in a control signal that is fed back from the mobile station MS, with the same reference numbers being used for parts that are identical.

A control signal demodulation unit 20 demodulates control information that is sent from a mobile station MS, and inputs downlink reception SIR information and a sector boundary judgment bit to a data stream number decision unit 13. A sector boundary judgment bit of '0' indicates that the mobile station MS is in the center of the sector, and a sector boundary judgment bit of '1' indicates that the mobile station MS is at the sector boundary. The data stream number decision unit 13 decides the number of data streams based on the reception SIR information and the sector boundary judgment bit. More specifically, first, when the sector boundary judgment bit is 1', the data stream number decision unit 13 decides the number of data streams to '1'. However, when the sector boundary judgment bit is '0', the data stream number decision unit 13 decides the number of data streams by comparing the reception SIR information with a specified threshold value as in the first embodiment.

(c) Mobile Station Construction

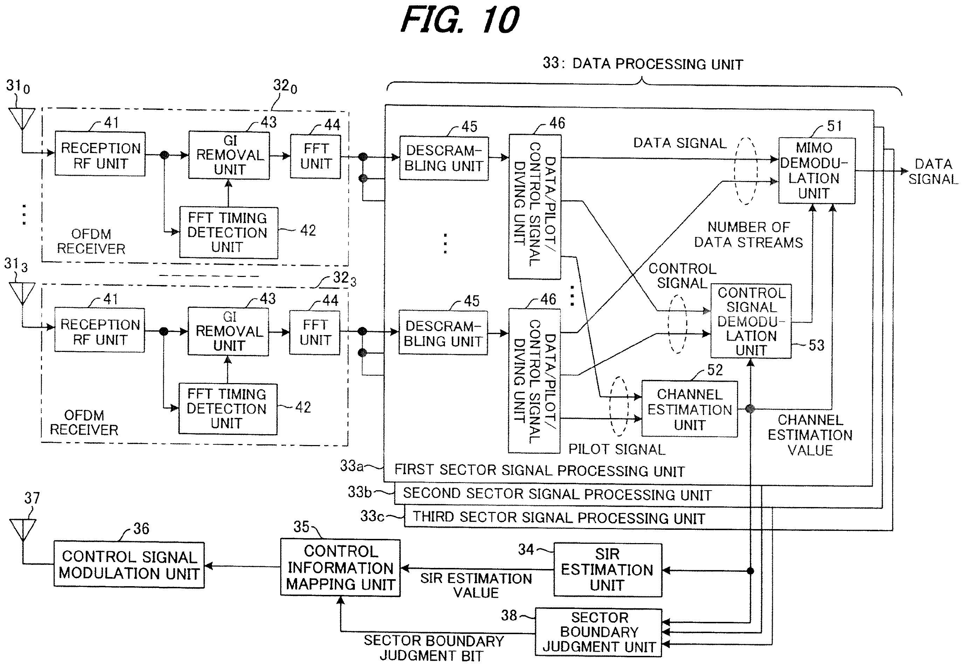

FIG. 10 is a drawing showing the construction of a mobile station of this second embodiment, where processing from the FFT unit and later differs from that of the first embodiment. Also, the construction of OFDM

reception units $32_0$ to $32_3$, and data processing unit 33 are different. That is, the OFDM reception units $32_0$ to $32_3$ comprise a reception RF unit 41, FFT timing detection unit 42, GI removal unit 43 and FFT unit 44. The data processing unit 33 comprises a first sector signal processing unit 33a, second sector signal processing unit 33b and third sector signal processing unit 33c. In the first sector processing unit 33a, descramble units 45 that correspond to the OFDM reception units $32_0$ to $32_3$ multiple the N number of subcarrier signal components that are output from the FFT units 44 by the same code as the scramble code for sector A, then extracts and outputs the signals received from sector A. Next, data/pilot/control signal separation units 46 separate out the data signals, pilot signals and control signals that are mapped at specified locations, and input the respective data signals to a MIMO demodulation unit 51 of the data processing unit 33, input the pilot signals to a channel estimation unit 52 and input the control signals to a control signal demodulation unit 53. After that, as in the first embodiment, the channel estimation unit estimates the channel of sector A where the mobile station MS is located, the control signal demodulation unit 53 demodulates the control signal and inputs the number of data streams to the MIMO demodulation unit 51, and the MIMO demodulation unit 51 demodulates and outputs the data signal.

On the other hand, the second sector processing unit 33b multiplies the N number of subcarrier signal components that are output from the FFT units 44 of the OFDM reception units $32_0$ to $32_3$ by the same codes as the scramble code of sector B, then extracts and outputs the signals received from sector B. Next, the second sector processing unit 33b separates the pilot signals that are mapped at specified locations and estimates the channel of sector B as in the first embodiment. Similarly, the third sector processing unit 33c performs channel estimation of sector C.

The SIR estimation unit 34 uses the channel estimation value that was estimated by the channel estimation unit 52 to estimate the downlink reception SIR from sector A by the same method as in the first embodiment. A sector boundary judgment unit 38 uses the channel estimation values from the first to third signal processing units 33a to 33c to generate a sector boundary judgment bit. More specifically, taking the sum of the squares of the real portion and imaginary portion of the channel estimation values (complex values) to be the desired signal power, when the difference between the desired signal power of the first and second sector signal processing units 33a, 33b, or the difference between the desired signal power of the first and third sector signal processing units 33a, 33c is less than a threshold value, the sector boundary judgment unit 38 determines that the mobile station is near the sector boundary and sets the sector boundary judgment bit to '1'. For all other cases, the sector boundary judgment unit 38 sets the sector boundary judgment bit to '0'. A control information mapping unit 35 maps the SIR estimation value and the sector boundary judgment bit as control information, and a control signal modulation unit 36 generates a control signal by performing processing such as error correction encoding and data modulation, after which it multiplexes the control signal, user data and pilot signals and transmits the resulting signal from the transmission antenna 37.

- Effect of the Invention

With the present invention, pilot signals that are used for channel estimation during single data stream transmission in a specified cell, and pilot signals that are used for channel estimation during single data stream transmission in adjacent cells do not overlap each other in the frequency direction and/or time axis direction, so interference from pilot signals of other cells with which a mobile station is not communicating can be prevented, and thus channel estimation can be performed with high precision.

Moreover, with the present invention, pilot signals that is used for channel estimation during single data stream transmission in a specified cell, and pilots signals that are used for channel estimation during single data stream transmission in adjacent cells do not overlap each other in the frequency direction and/or time axis direction, and the power of the pilot signals that are used in channel estimation and that are transmitted from a specified antenna during single data stream transmission is greater than the power of pilot signals that are transmitted from other antennas, so when a mobile station is at the cell boundary, the inference from pilot signals is sufficiently small, and thus it is possible to perform channel estimation that is capable of following sudden channel fluctuation. The same effects are obtained even when the cell is divided into sectors.

Furthermore, with the present invention, the interval between pilot insertion subcarriers from a specified antenna can be shortened, so during MIMO-OFDM communication, it is possible to perform channel estimation that is capable of following even when sudden channel fluctuation occurs.

**Claims**

1. A MIMO-OFDM communication method for a base station (BS) that uses a plurality of OFDM transmitters (11) to transmit data and pilot signals to a mobile station (MS) having a plurality of antennas (12), from a plurality of antennas by multiple input multiple output (MIMO) communication, comprising:

  deciding whether to transmit data and pilot signals to the mobile station by MIMO communication, which is multiple data stream transmission, or by single input multiple output (SIMO) communication, which is single data stream transmission;

arranging the pilot signals in the frequency direction such that the frequency used for sending pilot signals during single data stream transmission in a specified cell is different from the frequency used for sending pilot signals during single data stream transmission in adjacent cells; and

transmitting control signals, the data and the pilot signals to the mobile station having a plurality of antennas, the control signals including information that indicates the number of data streams which are transmitted from the base station to the mobile station by one of the multiple data stream transmission and the single data stream transmission.

2. The MIMO-OFDM communication method of claim 1 further comprising:

receiving the pilot signals that are transmitted from the base station, measuring the communication environment based upon the received pilot signals in the mobile station and feeding back data to the base station that indicates the communication environment; and

deciding in the base station, whether to transmit data and pilot signals to the mobile station having a plurality of antennas by multiple data stream transmission or by single data stream transmission based on the data indicating the communication environment.

3. A base station (BS) for using a plurality of OFDM transmitters (11) to transmit data and pilot signals to a mobile station (MS) having a plurality of antennas (12), from a plurality of antennas by multiple input multiple output (MIMO) communication, comprising:

a communication method decision unit configured to decide whether to transmit data and pilot signals by MIMO communication, which is multiple data stream transmission, or by single input multiple output (SIMO) communication, which is single data stream transmission;

a pilot frequency control unit configured to control the frequency used for sending the pilot signals such that the frequency used for sending pilot signals during single data stream transmission in a specified cell is different from the frequency used for sending pilot signals during single data stream transmission in adjacent cells; and

a transmission unit configured to transmit control signals, the data and the pilot signals to the mobile station having a plurality of antennas, the control signals including information that indicates the number of data streams which are transmitted from the base station to the mobile station by one of the multiple data stream transmission and the single data stream transmission.

4. A MIMO-OFDM communication method for a mobile station (MS) having a plurality of antennas (12) that receives data and pilot signals that are transmitted from a plurality of antennas using a plurality of OFDM transmitters (11) by multiple input multiple output (MIMO) communication, comprising:

receiving data and pilot signals transmitted from a base station (BS) selectively by MIMO communication, which is multiple data stream transmission, or by single input multiple output (SIMO) communication, which is single data stream transmission;

receiving control signals, the control signals including information that indicates the number of data streams which are transmitted from the base station to the mobile station by one of the multiple data stream transmission and the single data stream transmission; and

receiving pilot signals that are arranged in the frequency direction such that the frequency used for sending pilot signals during single data stream transmission in a specified cell is different from the frequency used for sending pilot signals during single data stream transmission in adjacent cells.

5. A mobile station (MS) having a plurality of antennas (12) for receiving data and pilot signals that are transmitted from a plurality of antennas using a plurality of OFDM transmitters (11) by multiple input multiple output (MIMO) communication, comprising:

a receiving unit configured to receive data and pilot signals transmitted from a base station (BS) selectively by MIMO communication, which is multiple data stream transmission, or by single input multiple output(SIMO) communication, which is single data stream transmission; and

a separation unit configured to separate the pilot signals from the data, the data and pilot signals being received by the receiving unit, wherein the receiving unit is further configured to receive control signals, the control signals including information that indicates the number of data streams which are transmitted from the base station to the mobile station by one of the multiple data stream transmission and the single data stream transmission and to receive the pilot signals that are arranged in the frequency direction such that the frequency used for sending pilot signals during single data stream transmission in a specified cell is different from the frequency used for sending pilot signals during single data stream transmission in adjacent cells.

6. A wireless communication system comprising a base station according to claim 3 and a mobile station according to claim 5.

**Patentansprüche**

1. Verfahren zur MIMO-OFDM-Datenübertragung für eine Basisstation (BS), die eine Vielzahl von OFDM-Sendern (11) verwendet, um von einer Vielzahl von Antennen durch Mehrfacheingang-Mehrfachausgang- (MIMO-) Datenübertragung Daten und Pilotsignale an eine Mobilstation (MS) mit einer Vielzahl von Antennen (12) zu senden, umfassend:

Entscheiden, ob Daten und Pilotsignale an die Mobilstation durch MIMO-Datenübertragung, bei welcher es sich um Mehrfachdatenstromübertragung handelt, oder durch Einfacheingang-Mehrfachausgang- (SIMO-) Datenübertragung gesendet werden sollen, bei welcher es sich um Einfachdatenstromübertragung handelt,
Anordnen der Pilotsignale in der Frequenzrichtung derart, dass sich die zum Senden von Pilotsignalen während einer Einfachdatenstromübertragung in einer bestimmten Zelle verwendete Frequenz von der zum Senden von Pilotsignalen während einer Einfachdatenstromübertragung in angrenzenden Zellen verwendeten Frequenz unterscheidet, und
Senden von Steuersignalen sowie der Daten und der Pilotensignale an die eine Vielzahl von Antennen aufweisende Mobilstation, wobei die Steuersignale Informationen beinhalten, welche die Anzahl der Datenströme anzeigen, die durch entweder die Mehrfachdatenstromübertragung oder die Einfachdatenstromübertragung von der Basisstation an die Mobilstation gesendet werden.

2. Verfahren zur MIMO-OFDM-Datenübertragung nach Anspruch 1, ferner umfassend:

Empfangen der von der Basisstation gesendeten Pilotsignale, Vermessen der Datenübertragungsumgebung auf Grundlage der in der Mobilstation empfangenen Pilotsignale und Rückmelden von die Datenübertragungsumgebung anzeigenden Daten an die Basisstation, und
Entscheiden in der Basisstation auf Grundlage der die Datenübertragungsumgebung anzeigenden Daten, ob Daten und Pilotsignale durch Mehrfachdatenstromübertragung oder durch Einfachdatenstromübertragung an die eine Vielzahl von Antennen aufweisende Mobilstation gesendet werden sollen.

3. Basisstation (BS) zum Verwenden einer Vielzahl von OFDM-Sendern (11) zum Senden von Daten und Pilotsignalen von einer Vielzahl von Antennen durch Mehrfacheingang-Mehrfachausgang-(MIMO-) Datenübertragung an eine Mobilstation (MS) mit einer Vielzahl von Antennen (12), umfassend:

eine Datenübertragungsverfahren-Entscheidungseinheit, die dafür konfiguriert ist, zu entscheiden, ob Daten und Pilotsignale durch MIMO-Datenübertragung, bei welcher es sich um Mehrfachdatenstromübertragung handelt, oder durch Einfacheingang-Mehrfachausgang-(SIMO-) Datenübertragung gesendet werden sollen, bei welcher es sich um Einfachdatenstromübertragung handelt,
eine Pilotfrequenz-Steuereinheit, die dafür konfiguriert ist, die zum Senden der Pilotsignale verwendete Frequenz derart zu steuern, dass sich die zum Senden von Pilotsignalen während einer Einfachdatenstromübertragung in einer bestimmten Zelle verwendete Frequenz von der zum Senden von Pilotsignalen während einer Einfachdatenstromübertragung in angrenzenden Zellen verwendeten Frequenz unterscheidet, und
eine Übertragungseinheit, die dafür konfiguriert ist, Steuersignale sowie die Daten und die Pilotsignale an die eine Vielzahl von Antennen aufweisende Mobilstation zu senden, wobei die Steuersignale Informationen beinhalten, welche die Anzahl der Datenströme anzeigen, die durch entweder die Mehrfachdatenstromübertragung oder die Einfachdatenstromübertragung von der Basisstation an die Mobilstation gesendet werden.

4. Verfahren zur MIMO-OFDM-Datenübertragung für eine Mobilstation (MS) mit einer Vielzahl von Antennen (12), die von einer Vielzahl von Antennen unter Verwendung einer Vielzahl von OFDM-Sendern (11) durch Mehrfacheingang-Mehrfachausgang- (MIMO-) Datenübertragung gesendete Daten und Pilotsignale empfängt, umfassend:

Empfangen von wahlweise durch MIMO-Datenübertragung, bei welcher es sich um Mehrfachdatenstromübertragung handelt, oder durch Einfacheingang-Mehrfachausgang-(SIMO-) Datenübertragung, bei welcher es sich um Einfachdatenstromübertragung handelt, von einer Basisstation (BS) gesendeten Daten und Pilotsignalen,
Empfangen von Steuersignalen, wobei die Steuersignale Informationen beinhalten, welche die Anzahl der Datenströme anzeigen, die durch entweder die Mehrfachdatenstromübertragung oder die Einfachdatenstromübertragung von der Basisstation an die Mobilstation gesendet werden, und

Empfangen von Pilotsignalen, die derart in der Frequenzrichtung angeordnet sind, dass sich die zum Senden von Pilotsignalen während einer Einfachdatenstromübertragung in einer bestimmten Zelle verwendete Frequenz von der zum Senden von Pilotsignalen während einer Einfachdatenstromübertragung in angrenzenden Zellen verwendeten Frequenz unterscheidet.

5. Mobilstation (MS) mit einer Vielzahl von Antennen (12) zum Empfangen von einer Vielzahl von Antennen unter Verwendung einer Vielzahl von OFDM-Sendern (11) durch Mehrfacheingang-Mehrfachausgang- (MIMO-) Datenübertragung gesendeter Daten und Pilotsignale, umfassend:

eine Empfangseinheit, die dafür konfiguriert ist, wahlweise durch MIMO-Datenübertragung, bei welcher es sich um Mehrfachdatenstromübertragung handelt, oder durch Einfacheingang-Mehrfachausgang- (SIMO-) Datenübertragung, bei welcher es sich um Einfachdatenstromübertragung handelt, von einer Basisstation (BS) gesendete Daten und Pilotsignale zu empfangen, und

eine Trenneinheit, die dafür konfiguriert ist, die Pilotsignale von den Daten zu trennen, wobei die Daten und Pilotsignale von der Empfangseinheit empfangen werden, wobei die Empfangseinheit ferner dafür konfiguriert ist, Steuersignale zu empfangen, wobei die Steuersignale Informationen beinhalten, welche die Anzahl der Datenströme anzeigen, die durch entweder die Mehrfachdatenstromübertragung oder die Einfachdatenstromübertragung von der Basisstation an die Mobilstation gesendet werden, sowie die Pilotsignale zu empfangen, welche in der Frequenzrichtung derart angeordnet sind, dass sich die zum Senden von Pilotsignalen während einer Einfachdatenstromübertragung in einer bestimmten Zelle verwendete Frequenz von der zum Senden von Pilotsignalen während einer Einfachdatenstromübertragung in angrenzenden Zellen verwendeten Frequenz unterscheidet.

6. System zur Funkdatenübertragung, umfassend eine Basisstation nach Anspruch 3 sowie eine Mobilstation nach Anspruch 5.

**Revendications**

1. Procédé de communication MIMO-OFDM pour une station de base (BS) qui utilise une pluralité d'émetteurs OFDM (11) pour transmettre des données et des signaux pilotes à une station mobile (MS) ayant une pluralité d'antennes (12), à partir d'une pluralité d'antennes par une communication à entrées multiples et sorties multiples (MIMO), comprenant les étapes consistant à :

décider de transmettre ou non des données et des signaux pilotes à la station mobile par une communication MIMO, qui est une transmission de flux de données multiples, ou par une communication à entrée unique et sorties multiples (SIMO), qui est une transmission de flux de données unique ;

disposer les signaux pilotes dans la direction de fréquence de sorte que la fréquence utilisée pour envoyer des signaux pilotes pendant une transmission de flux de données unique dans une cellule spécifiée est différente de la fréquence utilisée pour envoyer des signaux pilotes pendant une transmission de flux de données unique dans des cellules adjacentes ; et

transmettre des signaux de commande, les données et les signaux pilotes à la station mobile ayant une pluralité d'antennes, les signaux de commande comprenant des informations qui indiquent le nombre de flux de données qui sont transmis de la station de base à la station mobile par l'une parmi la transmission de flux de données multiples et la transmission de flux de données unique.

2. Procédé de communication MIMO-OFDM selon la revendication 1 comprenant en outre les étapes consistant à :

recevoir les signaux pilotes qui sont transmis par la station de base, mesurer l'environnement de communication sur la base des signaux pilotes reçus dans la station mobile et renvoyer des données à la station de base qui indiquent l'environnement de communication ; et

décider, dans la station de base, de transmettre ou non des données et des signaux pilotes à la station mobile ayant une pluralité d'antennes par une transmission de flux de données multiples ou par une transmission de flux de données unique sur la base des données indiquant l'environnement de communication.

3. Station de base (BS) pour utiliser une pluralité d'émetteurs OFDM (11) pour transmettre des données et des signaux pilotes à une station mobile (MS) ayant une pluralité d'antennes (12), à partir d'une pluralité d'antennes par communication à entrées multiples et sorties multiples (MIMO), comprenant :

une unité de décision de procédé de communication configurée pour décider de transmettre ou non des données et des signaux pilotes par une communication MIMO, qui est une transmission de flux de données multiples, ou une communication à entrée unique et sorties multiples (SIMO), qui est une transmission de flux de données unique ;

une unité de commande de fréquence pilote configurée pour commander la fréquence utilisée pour envoyer les signaux pilotes de sorte que la fréquence utilisée pour envoyer des signaux pilotes pendant une transmission de flux de données unique dans une cellule spécifiée est différente de la fréquence utilisée pour envoyer des signaux pilotes pendant une transmission de flux de données unique dans des cellules adjacentes ; et

une unité de transmission configurée pour transmettre des signaux de commande, les données et les signaux pilotes à la station mobile ayant une pluralité d'antennes, les signaux de commande comprenant des informations qui indiquent le nombre de flux de données qui sont transmis de la station de base à la station mobile par l'une parmi la transmission de flux de données multiples et la transmission de flux de données unique.

4. Procédé de communication MIMO-OFDM pour une station mobile (MS) ayant une pluralité d'antennes (12) qui reçoit des données et des signaux pilotes qui sont transmis par une pluralité d'antennes en utilisant une pluralité d'émetteurs OFDM (11) par une communication à entrées multiples et sorties multiples (MIMO), comprenant les étapes consistant à :

recevoir des données et des signaux pilotes transmis par une station de base (BS) sélectivement par une communication MIMO, qui est une transmission de flux de données multiples, ou par une communication à entrée unique et sorties multiples (SIMO), qui est une transmission de flux de données unique ;

recevoir des signaux de commande, les signaux de commande comprenant des informations qui indiquent le nombre de flux de données qui sont transmis par la station de base à la station mobile par l'une parmi la transmission de flux de données multiples et la transmission de flux de données unique ; et

recevoir des signaux pilotes qui sont disposés dans la direction de fréquence de sorte que la fréquence utilisée pour envoyer des signaux pilotes pendant une transmission de flux de données unique dans une cellule spécifiée est différente de la fréquence utilisée pour envoyer des signaux pilotes pendant une transmission de flux de données unique dans des cellules adjacentes.

5. Station mobile (MS) ayant une pluralité d'antennes (12) pour recevoir des données et des signaux pilotes qui sont transmis par une pluralité d'antennes en utilisant une pluralité d'émetteurs OFDM (11) par une communication à entrées multiples et sorties multiples (MIMO), comprenant :

une unité de réception configurée pour recevoir des données et des signaux pilotes transmis par une station de base (BS) sélectivement par une communication MIMO, qui est une transmission de flux de données multiples, ou par une communication à entrée unique et sorties multiples (SIMO), qui est une transmission de flux de données unique ; et

une unité de séparation configurée pour séparer les signaux pilotes des données, les données et les signaux pilotes étant reçus par l'unité de réception, dans laquelle

l'unité de réception est en outre configurée pour recevoir des signaux de commande, les signaux de commande comprenant des informations indiquant le nombre de flux de données qui sont transmis par la station de base à la station mobile par l'une parmi la transmission de flux de données multiples et la transmission de flux de données unique et pour recevoir les signaux pilotes qui sont disposés dans la direction de fréquence de telle sorte que la fréquence utilisée pour envoyer des signaux pilotes pendant une transmission de flux de données unique dans une cellule spécifiée est différente de la fréquence utilisée pour envoyer des signaux pilotes pendant une transmission de flux de données unique dans des cellules adjacentes.

6. Système de communication sans fil comprenant une station de base selon la revendication 3 et une station mobile selon la revendication 5.

# FIG. 1

# FIG. 2

ASSIGNMENT OF TRANSMISSION ANTENNAS USED

| COMMUNICATION ENVIRONMENT | NUMBER OF TRANSMITTING ANTENNAS | NUMBER OF DATA STREAMS | TRANSMISSION ANTENNA NUMBERS |
|---|---|---|---|
| 1 | 1 | 1 | 1 |
| 2 | 2 | 2 | 1, 2 |
| 3 | 3 | 3 | 1, 2, 3 |
| 4 | 4 | 4 | 1, 2, 3, 4 |

## FIG. 3

EP 2 642 675 B1

# FIG. 4

BS

OFDM TRANSMITTER $11_0$

DATA SIGNAL → DATA STREAM DIVIDING UNIT (15) — $D_0$ ... $D_3$

ERROR CORRECTION ENCODING UNIT (21) → DATA MODULATION UNIT (22) → DATA/PILOT/CONTROL SIGNAL MULTIPLEXING UNIT (24) → SCRAMBLING UNIT (25) → IFFT UNIT (26) → GI INSERTION UNIT (27) → TRANSMISSION RF UNIT (28)

GAIN ADJUSTMENT UNIT (23b)

PILOT P1 — PILOT SIANGL GENERATION UNIT (23a)

OFDM TRANSMITTER $11_3$

CONTROL INFORMATION MAPPING UNIT (14) → ERROR CORRECTION ENCODING UNIT (16) → DATA MODULATION UNIT (17)

DATA STREAM NUMBER DECISION UNIT (13) ← DOWNLINK RECEPTION SIR ← CONTROL SIGNAL DEMODULATION UNIT (20) ← RECEPTION RF UNIT (18)

NUMBER OF DATA STREAMS

$12_0$  $12_3$  19

EP 2 642 675 B1

19

FIG. 5

EP 2 642 675 B1

# FIG. 6

CELL A / CELL B / CELL C

AMONG CELLS, THERE IS NO INTERFRENCE BETWEEN PILOT SYMBOLS P1 HAVING HIGH TRANSMISSION POWER

HIGH — TRANSMISSION POWER — LOW

··· FOR ANTENNA 1
··· FOR ANTENNA 2
··· FOR ANTENNA 3
··· FOR ANTENNA 4

EP 2 642 675 B1

# FIG. 7

22

# FIG. 8

AMONG SECTORS, THERE IS NO INTERFRENCE BETWEEN
PILOT SYMBOLS P1 HAVING HIGH TRANSMISSION POWER

## FIG. 9

EP 2 642 675 B1

**FIG. 10**

33: DATA PROCESSING UNIT

DATA SIGNAL

51 — MIMO DEMODULATION UNIT

DATA SIGNAL

NUMBER OF DATA STREAMS

CONTROL SIGNAL

53 — CONTROL SIGNAL DEMODULATION UNIT

CHANNEL ESTIMATION VALUE

52 — CHANNEL ESTIMATION UNIT

PILOT SIGNAL

46 — DATA/PILOT/CONTROL SIGNAL DIVING UNIT

46 — DATA/PILOT/CONTROL SIGNAL DIVING UNIT

45 — DESCRAMBLING UNIT

45 — DESCRAMBLING UNIT

FIRST SECTOR SIGNAL PROCESSING UNIT
SECOND SECTOR SIGNAL PROCESSING UNIT
THIRD SECTOR SIGNAL PROCESSING UNIT

33a
33b
33c

32₀
32₃

44 — FFT UNIT

44 — FFT UNIT

42 — FFT TIMING DETECTION UNIT

42 — FFT TIMING DETECTION UNIT

43 — GI REMOVAL UNIT

43 — GI REMOVAL UNIT

41 — RECEPTION RF UNIT

41 — RECEPTION RF UNIT

OFDM RECEIVER

OFDM RECEIVER

31₀

31₃

34 — SIR ESTIMATION UNIT

SIR ESTIMATION VALUE

38 — SECTOR BOUNDARY JUDGMENT UNIT

SECTOR BOUNDARY JUDGMENT BIT

35 — CONTROL INFORMATION MAPPING UNIT

36 — CONTROL SIGNAL MODULATION UNIT

37

25

# FIG. 11

USER DATA → DATA MODULATION UNIT (1) → TIME DIVISION MULTIPLEXING UNIT (2) → SERIAL-TO-PARALLEL CONVERSION UNIT (3)

PILOT →

SERIAL-TO-PARALLEL CONVERSION UNIT outputs: 0, 1, 2, ..., M−1

IFFT UNIT (4): $f_0$, $f_1$, $f_2$, ..., $f_{M-1}$

IFFT UNIT → GI INSERTION UNIT (5) → $T_x$ (6) → TRANSMISSION ANTENNA (7)

## FIG. 12

USER DATA: 28 x M SYMBOLS = OFDM SYMBOL

PILOT: 4 x M SYMBOLS = 4 OFDM SYMBOLS

## FIG. 13

# FIG. 14

RECEIVING
ANTENNA
8

9
$R_X$

11
SYMBOL
EXTRACT
UNIT

12
FFT
UNIT

$S_0'$

$S_{M-1}'$

14
CHANNEL
COMPENSATION
UNIT

DEMODULATED
DATA

10
FFT TIMING
SYNCHRONIZATION
UNIT

13
CHANNEL
ESTIMATION
UNIT

PILOT

EP 2 642 675 B1

# FIG. 15

# FIG. 16

# FIG. 17

CELL A

CELL B

CELL C

$P_A$

$P_A$

$P_A$

$P_B$

$P_B$

$P_B$

$P_C$

$P_C$

$P_C$

t

f

1 SUBCARRIER

1 OFDM SYMBOL

PILOT SIGNALS $P_A$ TO $P_C$ OF EACH OF
THE CELLS INTERFERE WITH EACH OTHER

EP 2 642 675 B1

# FIG. 18

CELL A

CELL B

CELL C

EP 2 642 675 B1

AMONG CELLS, PILOT SIGNALS $P_A$ TO $P_C$ DO NOT INTERFERE WITH EACH OTHER

# FIG. 19

# FIG. 20

CELL A

CELL B

CELL C

TIME

FREQUENCY

$P_{A0}$
$P_{A1}$
$P_{A2}$
$P_{A3}$

$P_{B0}$
$P_{B1}$
$P_{B2}$
$P_{B3}$

$P_{C0}$
$P_{C1}$
$P_{C2}$
$P_{C3}$

··· FOR ANTENNA 1
··· FOR ANTENNA 2
··· FOR ANTENNA 3
··· FOR ANTENNA 4

EP 2 642 675 B1

**EP 2 642 675 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 02099995 A2
- EP 1178641 A1
- US 2003128658 A1
- WO 03041300 A1
- JP 2003304216 A